# EUROPÄISCHE PATENTSCHRIFT

(11) **EP 4 015 887 B1**
(45) Veröffentlichungstag und Bekanntmachung des Hinweises auf die Patenterteilung: **12.03.2025**
(21) Anmeldenummer: 20214022.4
(22) Anmeldetag: 15.12.2020
(51) Int. Cl.: F16L 13/08

(54) **ROHRANORDNUNG**
PIPE ARRANGEMENT
AGENCEMENT DE TUYAU

(43) Veröffentlichungstag der Anmeldung: 22.06.2022
(73) Patentinhaber: TI Automotive Technology Center GmbH, 76437 Rastatt (DE)
(72) Erfinder: Klemm, Jochen, 74930 Ittlingen (DE); Winter, Matthias, 76437 Rastatt (DE)
(74) Vertreter: Novagraaf Group

(56) Entgegenhaltungen:
- EP-A1- 3 575 660
- GB-A- 1 038 612
- US-A- 5 333 918
- US-B1- 6 631 740

## Beschreibung

Die Erfindung betrifft ein Verbindungselement für eine Rohranordnung und ein Rohr, wobei das Verbindungselement einen Grundkörper mit zumindest einem Durchgangskanal und einer Aufnahmebohrung zur Aufnahme eines Rohrendes umfasst, wobei die Aufnahmebohrung mit dem Durchgangskanal korrespondiert, wobei die Aufnahmebohrung einen größeren Querschnitt aufweist als der Durchgangskanal.

Eine derartige Anordnung ist aus dem Stand der Technik vorbekannt. Häufig finden derartige Verbindungselemente und Anordnungen in der Klimatisierungstechnik, beispielsweise in Klimaanlagen oder Kühlmittelkreisläufen, ihren Einsatz. Dabei ist die Anordnung insbesondere für mobile Einrichtungen zur Temperierung, beispielsweise in Elektrofahrzeugen oder in Anlagen für die Fahrzeugklimatisierung, geeignet. Über das Verbindungselement können verschiedene Rohre einer Rohranordnung oder Rohre mit anderen Rohren oder mit verschiedenen Komponenten einer Klimaanlage verbunden werden. Je nach eingesetztem Kühlmittel können dabei innerhalb der Klimaanlage sehr hohe Drücke entstehen. In diesem Zusammenhang ist es daher bekannt, Rohre in der Aufnahmebohrung von Verbindungselementen mittels einer Lötverbindung stoffschlüssig zu befestigen. Lötverbindungen sind mechanisch sehr belastbar und weisen eine sehr gute dauerhafte Dichtigkeit auf. Daher sind derartige Anordnungen grundsätzlich geeignet, in Klimaanlagen mit CO₂ als Kühlmittel eingesetzt zu werden. Bedingt durch die thermodynamischen Eigenschaften von CO₂ ist es dabei aber erforderlich, dass die Anordnung Drücken von bis zu 135 bar standhält. Aufgrund der guten sonstigen thermodynamischen Eigenschaften ist CO₂ insbesondere für den Einsatz in mobilen Klimaanlagen, beispielsweise in Kraftfahrzeugen, geeignet.

EP 3 575 660 A1, US 6,631,740 B1 und GB 1 038 612 A zeigen jeweils eine ein Verbindungselement und ein Rohr umfassende Anordnung, wobei das Verbindungselement einen Grundkörper mit zumindest einem Durchgangskanal und einer Aufnahmebohrung zur Aufnahme eines Rohrendes des Rohrs umfasst. Die Aufnahmebohrung korrespondiert mit dem Durchgangskanal und weist einen größeren Querschnitt als der Durchgangskanal auf.

Es hat sich gezeigt, dass die Ausgestaltung der Rohrenden produktionsbedingt häufig nicht plan ausgebildet und kegelförmig angeschnitten ist. Wird das Rohrende in die Aufnahmebohrung eingesteckt, können sich daher Zwischenräume ergeben, welche während des Lötvorgangs zu Lufteinschlüssen führen können. Lufteinschlüsse wiederum gehen mit verminderten mechanischen Belastbarkeiten einher, was im dauerhaften Betrieb einen Verlust von Kühlmittel zur Folge haben kann.

Der Erfindung liegt die Aufgabe zugrunde, ein Verbindungselement für eine Rohranordnung und eine Anordnung mit einer verbesserten dauerhaften Dichtigkeit und mechanischen Belastbarkeit bereitzustellen.

Diese Aufgabe wird mit den Merkmalen von Anspruch 1 gelöst. Auf vorteilhafte Ausgestaltungen nehmen die Unteransprüche Bezug.

Eine erfindungsgemäße Anordnung umfasst ein Verbindungselement und ein Rohr, dessen Rohrende in die Aufnahmebohrung eingesteckt ist.

Das erfindungsgemäße Verbindungselement für eine Rohranordnung umfasst einen Grundkörper mit zumindest einem Durchgangskanal und einer Aufnahmebohrung zur Aufnahme eines Rohrendes, wobei die Aufnahmebohrung mit dem Durchgangskanal korrespondiert, wobei die Aufnahmebohrung einen größeren Querschnitt aufweist als der Durchgangskanal, wobei zwischen Durchgangskanal und Aufnahmebohrung eine Übergangsstufe in den Grundkörper eingebracht ist.

Die Übergangsstufe bildet ein Reservoir, um aus dem Rohrende produktionsbedingt hervorstehende Abschnitte aufnehmen zu können. Dadurch kann gewährleistet werden, dass das Rohrende über den Umfang an dem Grund der Aufnahmebohrung anliegt. In dem Kontaktbereich zwischen Verbindungselement und Rohr ergeben sich dadurch nur sehr geringe Zwischenräume, so dass das Lot den Zwischenraum zwischen Verbindungselement und Rohr im Wesentlichen hohlraumfrei ausfüllen kann. Es ergibt sich ein definierter Spalt mit gleichbleibender Spaltbreite, was mit einer gleichmäßigen Aufnahmefähigkeit für das Lot einhergeht, durch die das Rohr mit dem Verbindungselement fest verbunden wird.

Dabei weist das Rohrende an der innenumfangsseitigen Kante erfindungsgemäß einen umlaufenden Grat auf, wobei der Grat in die Übergangsstufe ragt. Dies ermöglicht die einfache und kostengünstige Herstellung eines Rohrs mit einer gewünschten Länge. Gleichzeitig kann durch die Ausgestaltung des Verbindungselements gewährleistet werden, dass das Rohrende auf dem Grund der Aufnahmebohrung aufliegt. Der an der innenumfangsseitigen Kante des Rohrendes vorhandene Grat ragt dabei in die Übergangsstufe hinein. Insofern bildet die Übergangsstufe ein Aufnahmereservoir für hervorstehende Abschnitte des Rohrs. Die Stirnseite des Rohrendes kann kegelförmig abgeschrägt sein. Diese Ausgestaltung ergibt sich, wenn das Rohr mittels eines Rohrschneiders zugeschnitten wird. Mittels des Rohrschneiders kann das Rohr schnell und kostengünstig zugeschnitten werden.

Der Durchmesser der Übergangsstufe ist vorzugsweise größer als der Durchmesser des Durchgangskanals und kleiner als der Durchmesser der Aufnahmebohrung. Dabei korrespondiert der Durchmesser des Durchgangskanals vorzugsweise mit dem Durchmesser des in die Aufnahmebohrung einzusteckenden Rohrs. Dadurch liegt das Rohr im Bereich des Außenumfangs auf dem Grund der Aufnahmebohrung auf und der innenumfangsseitige Teil des Rohrs korrespondiert mit der Übergangsstufe.

Die Übergangsstufe weist einen radialen Abschnitt und einen axialen Abschnitt auf und der Übergang zwischen radialem Abschnitt und axialem Abschnitt ist abgerundet oder der Übergang bildet eine Schräge, Stufe oder Fase aus. Durch diese Ausgestaltung ist das Verbindungselement mechanisch besonders belastbar. Des Weiteren verringert die Übergangsstufe die Gefahr, dass Lot in den Durchgangskanal gelangt.

Der Grund der Aufnahmebohrung kann kegelförmig abgeschrägt sein. Dabei mündet die Schräge des Grunds vorzugsweise in die Übergangsstufe. Diese Ausgestaltung mit abgeschrägtem Grund und Übergangsstufe ist insbesondere zur Aufnahme von Rohren geeignet, die mittels eines Rohrschneiders zugeschnitten sind. Ein Rohrschneider umfasst Schneidräder, welche außenumfangsseitig um das Rohr herumgeführt werden. Dabei schneiden die Schneidrädchen des Rohrschneiders eine Kerbe in den Außenumfang des Rohrs und die durch den Rohrschneider abgetrennten Rohrabschnitte werden durch Aufbringen einer Zugkraft voneinander getrennt, bevor die Schneidrädchen das Rohr vollständig durchtrennt haben. Durch dieses Verfahren kann ein gleichbleibender Innendurchmesser des zugeschnittenen Rohrs gewährleistet werden. Bei der industriellen Fertigung wird darüber hinaus das abgeschnittene Rohrende häufig nicht entgratet. Dadurch weist das Rohrende an der innenumfangsseitigen Kante einen hervorstehenden Grat auf. Bedingt durch die Schneidrädchen bildet das Rohrende auch keine plane Schnittfläche, sondern ist kegelförmig abgeschrägt. Durch die erfindungsgemäße Ausgestaltung des Verbindungselements kann ein derartig zugeschnittenes Rohr passgenau in die Aufnahmebohrung des Verbindungselements eingeschoben werden. Zwischen Verbindungselement und Rohr ergibt sich ein definierter Spalt, welcher durch das Lot gleichmäßig gefüllt werden kann.

Die Aufnahmebohrung kann auf der der Übergangsstufe abgewandten Seite in eine Querschnittserweiterung münden. Die Querschnittserweiterung bildet eine die Aufnahmebohrung umgebende Löttasche. Diese kann einerseits dazu dienen, einen Lotring aufzunehmen, der nach dem Einstecken des Rohrs in die Aufnahmebohrung erwärmt wird. Dabei schmilzt das Lot und füllt den Zwischenraum zwischen Rohr und Verbindungselement. Es ist aber auch denkbar, einen Lotring vor dem Einschieben des Rohrs in die Aufnahmebohrung einzulegen und das Rohr anschließend einzustecken. Dabei schmilzt das Lot auf, wenn das Verbindungselement erwärmt wird. Das geschmolzene Lot füllt den Spalt zwischen Rohr und Verbindungselement und steigt in die Querschnittserweiterung auf. Dabei kann anhand des durch die Querschnittserweiterung aufgenommenen Lotes überprüft werden, inwieweit der Lötvorgang eine stabile Verbindung zwischen Rohr und Verbindungselement bewirkt hat.

Der Lotring ist vorzugsweise aus Kupfer oder einer Kupferlegierung ausgebildet. Der Lotring kann aber auch aus anderen metallischen Materialien oder Legierungen ausgebildet sein.

Das Verbindungselement und das Rohr können stoffschlüssig mittels einer Lötverbindung verbunden sein. Eine Lötverbindung ist eine dauerhaft dichte und mechanisch belastbare Verbindung von Verbindungselement und Rohr.

Eine derartige Anordnung ist insbesondere zum Einsatz in Klimaanlagen geeignet. Insbesondere geeignet ist dabei der Einsatz in Klimaanlagen mit CO₂ als Kältemittel. Die Anordnung eignet sich aber auch für andere Anwendungen, beispielsweise für Kraftstoffleitungen. Die erfindungsgemäße Anordnung findet insbesondere Anwendung in Klimaanlagen und Kühlmittelkreisläufen von Kraftfahrzeugen.

Bei dem erfindungsgemäßen Verfahren zur Herstellung einer Anordnung wird zunächst ein Rohr mittels eines Rohrschneiders zugeschnitten, ein Lotring hinzugefügt und das Rohrende in die Aufnahmebohrung eingesteckt, wobei der Grat des Rohrendes in die Übergangsstufe ragt. Anschließend wird die Anordnung erhitzt, so dass das Lot schmilzt und zwischen Innenwand der Aufnahmebohrung und Außenwand des Rohrs aufsteigt. Dabei kann überschüssiges Lot in der Querschnittserweiterung aufgenommen werden.

Gemäß einer ersten Alternative des Verfahrens wird der Lotring in die Aufnahmebohrung eingelegt und anschließend das Rohr in die Aufnahmebohrung eingesteckt. Dadurch befindet sich der Lotring innerhalb des Verbindungselements zwischen Rohr und Verbindungselement.

Gemäß einer zweiten Alternative wird der Lotring auf das Rohr aufgeschoben und das Rohr anschließend in die Aufnahmebohrung eingesteckt, wobei der Lotring vor dem Lötvorgang in der Querschnittserweiterung zur Anlage gelangt.

Einige Ausgestaltungen des erfindungsgemäßen Verbindungselements und der erfindungsgemäßen Anordnung werden nachfolgend anhand der Figuren näher erläutert. Diese zeigen, jeweils schematisch:
- Fig. 1: eine Anordnung mit Verbindungselement, Rohr und Lotring vor dem Fügen im Schnitt;
- Fig. 2: die Anordnung gemäß Figur 1 mit in die Aufnahmebohrung eingestecktem Rohr und Lotring;
- Fig. 3: die Anordnung gemäß Figur 1 mit auf das Rohr aufgeschobenem Lotring;
- Fig. 4: die in Figur 1 gezeigte Anordnung nach Abschluss des Lötvorgangs.

Die Figuren zeigen eine Anordnung 10 mit einem Verbindungselement 1 und einem Rohr 9. Die Anordnung 10 ist Bestandteil einer Klimaanlage mit CO₂ als Kältemittel.

Das Verbindungselement 1 umfasst einen Grundkörper 2 aus metallischem Werkstoff, beispielsweise Stahl, Edelstahl oder Aluminium. Der Grundkörper 2 ist mit einem Durchgangskanal 3 versehen, wobei der Durchgangskanal 3 mit einer Aufnahmebohrung 4 zur Aufnahme eines Rohrendes 5 des Rohrs 9 korrespondiert. Dabei weist die Aufnahmebohrung 4 einen größeren Querschnitt auf als der Durchgangskanal 3. Der Durchmesser der Aufnahmebohrung 4 ist so ausgestaltet, dass das Rohrende 5 des Rohrs 9 mit Spiel aufgenommen werden kann. Der Durchmesser des Durchgangskanals 3 entspricht im Wesentlichen dem Innendurchmesser des Rohrs 9. In alternativen Ausgestaltungen ist auch denkbar, dass das Rohrende 5 des Rohrs 9 über eine Presspassung in der Aufnahmebohrung 4 aufgenommen ist. Das Rohr 9 ist ebenfalls aus metallischem Werkstoff ausgebildet, beispielsweise aus Stahl, Edelstahl oder Aluminium.

Zwischen Durchgangskanal 3 und Aufnahmebohrung 4 ist eine Übergangsstufe 6 in den Grundkörper 2 eingebracht. Dabei ist der Durchmesser der Übergangsstufe 6 größer als der Durchmesser des Durchgangskanals 3 und kleiner als der Durchmesser der Aufnahmebohrung 4. Die Übergangsstufe 6 weist einen radialen Abschnitt und einen axialen Abschnitt auf und der Übergang zwischen radialem Abschnitt und axialem Abschnitt ist abgerundet.

Der Grund 7 der Aufnahmebohrung 4 ist kegelförmig abgeschrägt. Die Aufnahmebohrung 4 mündet auf der der Übergangsstufe 6 abgewandten Seite in eine Querschnittserweiterung 8.

Das Rohrende 5 weist an der innenumfangsseitigen Kante einen umlaufenden Grat 11 auf, wobei der Grat 11 in die Übergangsstufe 6 ragt. Die Stirnseite 12 des Rohrendes 5 ist kegelförmig abgeschrägt.

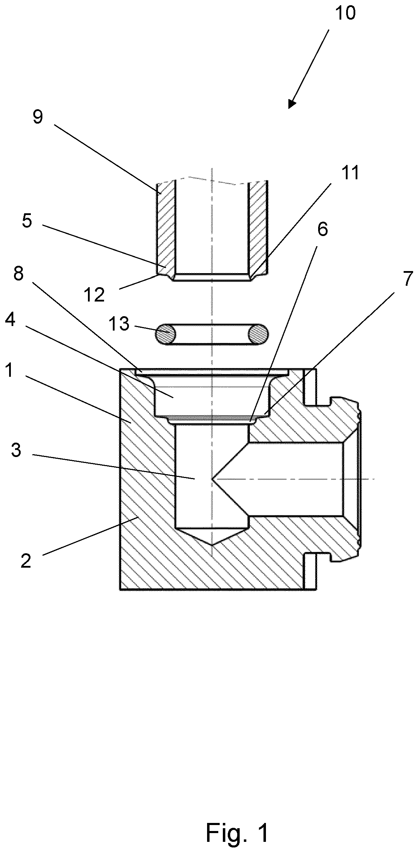

Figur 1 zeigt die Anordnung 10 vor dem Einstecken des Rohrs 9 in die Aufnahmebohrung 4.

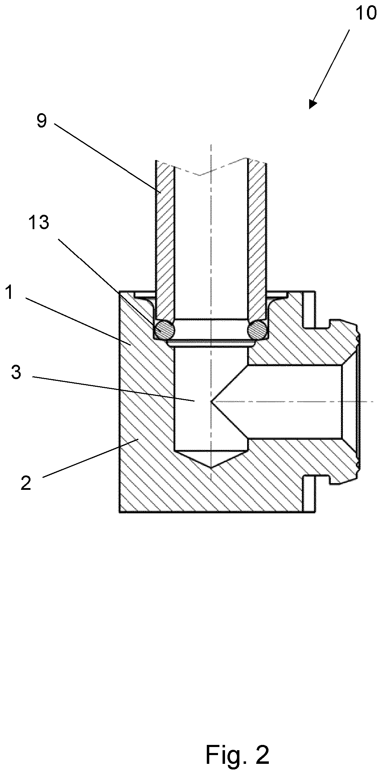

Figur 2 zeigt die Anordnung 10 gemäß Figur 1, wobei das Rohr 9 in die Aufnahmebohrung 4 eingesteckt ist. In der Aufnahmebohrung 4 befindet sich zwischen Rohr 9 und Übergangsstufe 6 ein Lotring 13.

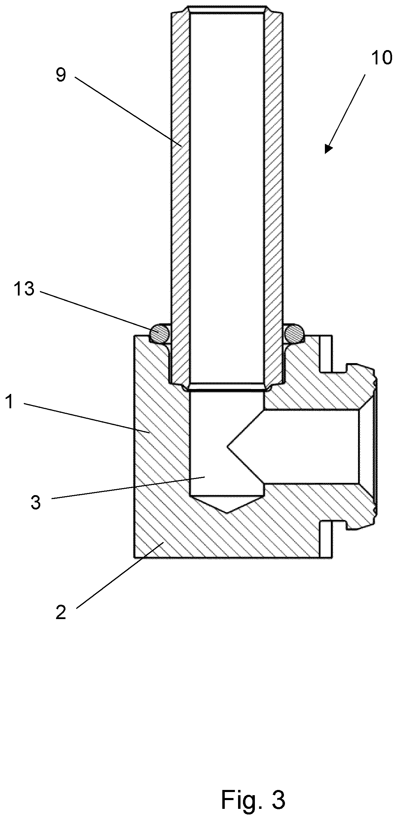

Figur 3 zeigt die Anordnung 10 gemäß Figur 1, wobei das Rohr 9 in die Aufnahmebohrung 4 eingesteckt ist. Auf das Rohr 9 ist ein Lotring 13 aufgeschoben, wobei der Lotring 13 in der Querschnittserweiterung 8 zur Anlage gelangt ist.

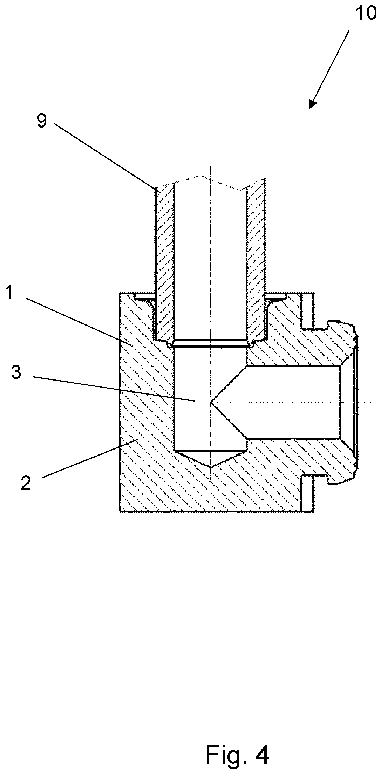

Figur 4 zeigt die Anordnung 10 gemäß Figur 1, bei welcher das in die Aufnahmebohrung 4 eingesteckte Rohr mittels einer Lötverbindung stoffschlüssig mit dem Verbindungselement 1 verbunden ist. Dabei ist überschüssiges Lot in der Übergangsstufe 6 und in der Querschnittserweiterung 8 aufgenommen. Anhand der in der Querschnittserweiterung 8 Menge aufgenommenen Lotes kann eine zerstörungsfreie Qualitätsüberprüfung der Lötverbindung vorgenommen werden.

Zum Herstellen der Anordnung 10 wird zunächst das Rohr 9 mittels eines Rohrschneiders zugeschnitten. Der Rohrschneider weist Schneidrädchen auf, welche über den Außenumfang des Rohrs 9 geführt werden. Bedingt durch den Schneidvorgang bildet sich an der innenumfangsseitigen Kante des Rohrs 9 ein umlaufender Grat 11. Durch die Geometrie der Schneidrädchen ist die Stirnseite 12 des Rohrendes 5 kegelförmig abgeschrägt.

Im nächsten Schritt wird ein Lotring 13 in die Aufnahmebohrung 4 des Verbindungselements 1 eingelegt und das Rohrende 5 des Rohrs 9 wird in die Aufnahmebohrung 4 eingesteckt, so dass der Lotring 13 zwischen der Stirnseite 12 des Rohres 9 und der Übergangsstufe 6 angeordnet ist. Anschließend wird die Anordnung 10 erhitzt, so dass das Lot schmilzt und den Spalt zwischen der Innenwand der Aufnahmebohrung 4 und der Außenwand des Rohrs 9 ausfüllt. Dabei steigt das Lot in dem Spalt auf und überschüssiges Lot wird durch die Querschnittserweiterung 8 aufgenommen. Wenn nach Abschluss der Lötarbeiten die Querschnittserweiterung 8 gleichmäßig mit Lot gefüllt ist, ist dies ein Indikator für einen ordnungsgemäßen Lötvorgang.

In einem alternativen Verfahren wird ein Lotring 13 auf das Rohr 9 aufgesteckt und anschließend das Rohr 9 in die Aufnahmebohrung 4 des Verbindungselementes 1 eingesteckt. Dabei gelangt der Lotring 13 in der Querschnittserweiterung 8 zur Anlage. Anschließend wird die Anordnung 10 erhitzt, so dass das Lot schmilzt und den Spalt zwischen der Innenwand der Aufnahmebohrung 4 und der Außenwand des Rohrs 9 ausfüllt.

## Patentansprüche

1. Anordnung (10), umfassend ein Verbindungselement (1) für eine Rohranordnung und ein Rohr (9), wobei das Verbindungselement einen Grundkörper (2) mit zumindest einem Durchgangskanal (3) und einer Aufnahmebohrung (4) zur Aufnahme eines Rohrendes (5) des Rohrs (9) umfasst, wobei die Aufnahmebohrung (4) mit dem Durchgangskanal (3) korrespondiert, wobei die Aufnahmebohrung (4) einen größeren Querschnitt aufweist als der Durchgangskanal (3), wobei zwischen Durchgangskanal (3) und Aufnahmebohrung (4) eine Übergangsstufe (6) in den Grundkörper (2) eingebracht ist, wobei die Übergangsstufe (6) ein Aufnahmereservoir für hervorstehende Abschnitte des Rohrs (9) bildet, wobei das Rohrende (5) des Rohrs (9) in die Aufnahmebohrung (4) eingesteckt ist, **dadurch gekennzeichnet, dass** das Rohrende (5) an der innenumfangsseitigen Kante einen umlaufenden Grat (11) aufweist, wobei der Grat (11) in die Übergangsstufe (6) ragt, wobei die Übergangsstufe (6) einen radialen Abschnitt und einen axialen Abschnitt aufweist und wobei der Übergang zwischen radialem Abschnitt und axialem Abschnitt abgerundet ist oder eine Schräge, Stufe oder Fase ausbildet.

2. Anordnung nach Anspruch 1, **dadurch gekennzeichnet, dass** der Durchmesser der Übergangsstufe (6) größer ist als der Durchmesser des Durchgangskanals (3) und kleiner ist als der Durchmesser der Aufnahmebohrung (4).

3. Anordnung nach der Anspruch 1 oder 2, **dadurch gekennzeichnet, dass** der Grund (7) der Aufnahmebohrung (4) kegelförmig abgeschrägt ist.

4. Anordnung nach einem der Ansprüche 1 bis 3, **dadurch gekennzeichnet, dass** die Aufnahmebohrung (4) auf der der Übergangsstufe (6) abgewandten Seite in eine Querschnittserweiterung (8) mündet.

5. Anordnung nach einem der Ansprüche 1 bis 4, **dadurch gekennzeichnet, dass** die Stirnseite (12) des Rohrendes (5) kegelförmig abgeschrägt ist.

6. Anordnung nach einem der Ansprüche 1 bis 5, **dadurch gekennzeichnet, dass** das Verbindungselement (1) und das Rohr (9) stoffschlüssig mittels einer Lötverbindung verbunden sind.

7. Kühlkreislauf eines Kraftfahrzeugs, umfassend zumindest eine Anordnung (10) nach einem der Ansprüche 1 bis 6.

8. Verfahren zur Herstellung einer Anordnung (10) nach einem der Ansprüche 1 bis 6, bei welchem zunächst ein Rohr (9) mittels eines Rohrschneiders zugeschnitten wird, ein Lotring (13) hinzugefügt wird und das Rohrende (5) des Rohrs (9) in die Aufnahmebohrung (4) eingesteckt wird, wobei der Grat (11) des Rohrendes (5) in die Übergangsstufe (6) ragt, wobei die Anordnung (10) erhitzt wird, so dass das Lot schmilzt und den Spalt zwischen Innenwand der Aufnahmebohrung (4) und Außenwand des Rohrs (9) ausfüllt und wobei das Lot in Richtung auf die Querschnittserweiterung (8) in dem Spalt aufsteigt und nach dem Lötvorgang überschüssiges Lot in der Querschnittserweiterung (8) aufgenommen ist.

9. Verfahren nach Anspruch 8, **dadurch gekennzeichnet, dass** der Lotring (13) in die Aufnahmebohrung (4) eingelegt wird und anschließend das Rohr (9) in die Aufnahmebohrung (4) eingesteckt wird.

10. Verfahren nach Anspruch 8, **dadurch gekennzeichnet, dass** der Lotring (13) auf das Rohr (9) aufgeschoben und das Rohr (9) anschließend in die Aufnahmebohrung (4) eingesteckt wird, wobei der Lotring (13) vor dem Lötvorgang in der Querschnittserweiterung (8) zur Anlage gelangt.

## Claims

1. Arrangement (10) comprising a connecting element (1) for a pipe arrangement, and a pipe (9), the connecting element comprising a main body (2) having at least one through-channel (3) and a receiving bore (4) for receiving a pipe end (5) of the pipe (9), the receiving bore (4) corresponding to the through-channel (3), the receiving bore (4) having a larger cross section than the through-channel (3), a transitional step (6) being introduced into the main body (2) between the through-channel (3) and the receiving bore (4), the transitional step (6) forming a receiving reservoir for protruding portions of the pipe (9), the pipe end (5) of the pipe (9) being inserted into the receiving bore (4), **characterized in that** the pipe end (5) has a circumferential burr (11) on the inner circumferential edge, the burr (11) projecting into the transitional step (6), the transitional step (6) having a radial portion and an axial portion, and the transition between the radial portion and the axial portion being rounded or forming a slope, step or chamfer.

2. Arrangement according to claim 1, **characterized in that** the diameter of the transitional step (6) is greater than the diameter of the through-channel (3) and smaller than the diameter of the receiving bore (4).

3. Arrangement according to claim 1 or 2, **characterized in that** the bottom (7) of the receiving bore (4) is conically tapered.

4. Arrangement according to any of claims 1 to 3, **characterized in that** the receiving bore (4) opens into a cross-sectional expansion (8) on the side facing away from the transitional step (6).

5. Arrangement according to any of claims 1 to 4, **characterized in that** the end face (12) of the pipe end (5) is conically tapered.

6. Arrangement according to any of claims 1 to 5, **characterized in that** the connecting element (1) and the pipe (9) are integrally connected by means of a solder connection.

7. Cooling circuit of a motor vehicle, comprising at least one arrangement (10) according to any of claims 1 to 6.

8. Method for producing an arrangement (10) according to any of claims 1 to 6, in which, firstly, a pipe (9) is cut by means of a pipe cutter, a solder ring (13) is added, and the pipe end (5) of the pipe (9) is inserted into the receiving bore (4), wherein the burr (11) of the pipe end (5) protrudes into the transitional step (6), wherein the arrangement (10) is heated, so that the solder melts and fills the gap between an inner wall of the receiving bore (4) and an outer wall of the pipe (9) and wherein the solder rises in the gap in the direction of the cross-sectional expansion (8) and, after the soldering process, excess solder is received in the cross-sectional expansion (8).

9. Method according to claim 8, **characterized in that** the solder ring (13) is inserted into the receiving bore (4) and the pipe (9) is subsequently inserted into the receiving bore (4).

10. Method according to claim 8, **characterized in that** the solder ring (13) is pushed onto the pipe (9) and the pipe (9) is subsequently inserted into the receiving bore (4), the solder ring (13) coming to rest in the cross-sectional expansion (8) before the soldering process.

## Revendications

1. Agencement (10), comprenant un élément de liaison (1) pour un agencement de tubes et un tube (9), l'élément de liaison comprenant un corps de base (2) comportant au moins un canal traversant (3) et un alésage de logement (4) pour le logement d'une extrémité de tube (5) du tube (9), l'alésage de logement (4) correspondant au canal traversant (3), l'alésage de logement (4) présentant une plus grande section transversale que le canal traversant (3), un gradin de transition (6) étant ménagé dans le corps de base (2) entre le canal traversant (3) et l'alésage de logement (4), le gradin de transition (6) formant un réservoir de logement pour des parties saillantes du tube (9), l'extrémité de tube (5) du tube (9) étant enfichée dans l'alésage de logement (4),
**caractérisé en ce que** l'extrémité de tube (5) présente, sur le bord circonférentiel intérieur, une arête (11) périphérique, l'arête (11) faisant saillie dans le gradin de transition (6), le gradin de transition (6) présentant une partie radiale et une partie axiale et la transition entre la partie radiale et la partie axiale étant arrondie ou formant un biseau, un gradin ou un chanfrein.

2. Agencement selon la revendication 1, **caractérisé en ce que** le diamètre du gradin de transition (6) est supérieur au diamètre du canal traversant (3) et est inférieur au diamètre de l'alésage de logement (4).

3. Agencement selon la revendication 1 ou 2, **caractérisé en ce que** le fond (7) de l'alésage de logement (4) est chanfreiné en forme de cône.

4. Agencement selon l'une des revendications 1 à 3, **caractérisé en ce que** l'alésage de logement (4) débouche dans une extension de section transversale (8) sur le côté opposé au gradin de transition (6).

5. Agencement selon l'une des revendications 1 à 4, **caractérisé en ce que** le côté frontal (12) de l'extrémité de tube (5) est chanfreiné en forme de cône.

6. Agencement selon l'une des revendications 1 à 5, **caractérisé en ce que** l'élément de liaison (1) et le tube (9) sont reliés par liaison de matière à l'aide d'une liaison par brasage.

7. Circuit de refroidissement d'un véhicule automobile, comprenant au moins un agencement (10) selon l'une des revendications 1 à 6.

8. Procédé pour la fabrication d'un agencement (10) selon l'une des revendications 1 à 6, dans lequel tout d'abord un tube (9) est coupé à dimension à l'aide d'un coupe-tubes, un anneau de brasage (13) est ajouté et l'extrémité de tube (5) du tube (9) est enfichée dans l'alésage de logement (4), l'arête (11) de l'extrémité de tube (5) faisant saillie dans le gradin de transition (6),
l'agencement (10) étant chauffé, de sorte que le métal d'apport de brasage fond et remplit l'interstice entre la paroi intérieure de l'alésage de logement (4) et la paroi extérieure du tube (9) et le métal d'apport de brasage montant en direction de l'extension de section transversale (8) dans l'interstice et, après l'opération de brasage, le métal d'apport de brasage en excès étant logé dans l'extension de section transversale (8).

9. Procédé selon la revendication 8, **caractérisé en ce que** l'anneau de brasage (13) est inséré dans l'alésage de logement (4) et ensuite le tube (9) est enfiché dans l'alésage de logement (4).

10. Procédé selon la revendication 8, **caractérisé en ce que** l'anneau de brasage (13) est enfilé sur le tube (9) et le tube (9) est ensuite enfiché dans l'alésage de logement (4), l'anneau de brasage (13) venant en appui dans l'extension de section transversale (8) avant l'opération de brasage.
